**Europäisches Patentamt**

**European Patent Office**

**Office européen des brevets**

(19)

(11) Veröffentlichungsnummer: **0 049 331**
**A2**

(12)

# EUROPÄISCHE PATENTANMELDUNG

(21) Anmeldenummer: **81105549.0**

(22) Anmeldetag: **15.07.81**

(51) Int. Cl.³: **B 62 J 11/00**

(30) Priorität: **07.10.80 DE 8026760 U**

(43) Veröffentlichungstag der Anmeldung:
**14.04.82 Patentblatt 82/15**

(84) Benannte Vertragsstaaten:
**AT BE CH FR GB IT LI NL SE**

(71) Anmelder: **Segger KG Industriekoffer -
Kunststoffspritzguss
Bevergern-Saltenwiese
D-4446 Hörstel(DE)**

(72) Erfinder: **Wriedt, Karl-Heinz
Pinienweg 3a
D-4440 Rheine(DE)**

(74) Vertreter: **Habbel, Hans-Georg, Dipl.-Ing.
Postfach 3429 Am Kanonengraben 11
D-4400 Münster(DE)**

(54) **Haltevorrichtung für Behälter an Zweirädern.**

(57) Die Erfindung schlägt eine in besonderer Weise ausgebildete Anbauplatte vor, die einerseits eine Anschlußvorrichtung aufweist, mit der sie an die unterschiedlichsten Gepäckträger von Zweiräder angeschlossen werden kann, andererseits die Möglichkeit gibt, einen Behälter aufzunehmen, beispielsweise einen handelsüblichen Aktenkoffer oder einen in besonderer Weise an den Einsatz am Zweirad ausgebildeten Koffer.

EP 0 049 331 A2

- 1 -

## Haltevorrichtung für Behälter an Zweiräder

Die Erfindung bezieht sich auf eine Haltevorrichtung
für Koffer oder kofferartige Behälter an dem üblicherweise aus Streben bestehenden Gepäckträger von
Zweirädern.

Es ist bekannt, Zweiräder mit zusätzlichen Koffern
oder kofferartigen Behältern auszurüsten, die dabei
am Gepäckträger festgelegt werden. Hierbei sind
speziell an die einzelnen Zweiradtypen ausgebildete
Behälter bekanntgeworden, die ortsfest befestigt
werden und wenn sie abgenommen werden, dabei gleichzeitig vom Gepäckträger in vollem Umfang gelöst
werden müssen. Derartige bekannte Behälter haben die
Aufgabe, auf längeren Strecken der Aufnahme von Gepäckstücken zu dienen, wobei andererseits die Möglichkeit besteht, diese Gepäckträger eben nur im
Bedarfsfall einzusetzen.

Der Erfindung liegt die Aufgabe zugrunde, eine Haltevorrichtung zu schaffen, die den Anschluß von Behälter an dem Gepäckträger schnell ermöglicht, dabei weiterhin die Möglichkeit gibt, daß der eigentliche Behälter nicht in besonderer Form an das Zweirad angepaßt sein muß, sondern es soll die Möglichkeit bestehen, derartige Behälter beispielsweise als normale Aktenkoffer zu benutzen, dabei gleichzeitig aber im Bedarfsfall an die in unterschiedlichster Weise ausgebildeten Gepäckträger von Zweiräder anzuschließen, unabhängig davon, ob es sich dabei um motorisch angetriebene Zweiräder oder beispielsweise um Fahrräder handelt.

Diese der Erfindung zugrundeliegende Aufgabe wird durch die in den Ansprüchen genannten Merkmale gelöst, insbesondere dadurch, daß eine in besonderer Weise ausgebildete Anbauplatte vorgeschlagen wird, die einerseits eine Anschlußvorrichtung aufweist, mit der sie an die unterschiedlichsten Gepäckträger von Zweiräder angeschlossen werden kann, andererseits die Möglichkeit gibt, einen Behälter aufzunehmen, beispielsweise einen handelsüblichen Aktenkoffer oder einen in besonderer Weise an den Einsatz am Zweirad ausgebildeten Koffer.

- 3 -

Die eigentliche Anbauplatte wird also gemäß dem Vorschlag der Erfindung an dem Zweirad festgelegt. Die zur Festlegung dienenden Befestigungsbügel umgreifen dabei die Tragkonstruktion des Gepäckträgers und können an am Mittelteil der Anbauplatte vorgesehenen, sich in unterschiedlichen Richtungen erstreckenden Langlöchern befestigt werden. Die sich in unterschiedlichen Richtungen erstreckenden Langlöcher geben dabei die Gewähr, daß trotz einheitlicher Fertigung der eigentlichen Anbauplatte der Anschluß an die unterschiedlichsten Gepäckträgerkonstruktionen möglich wird.

Das Mittelteil der Anbauplatte ist dabei gegenüber dem Ansatz der Tragleiste und des Anschlußbügels stufenförmig versetzt, so daß dadurch ein Raum geschaffen wird, der der Aufnahme der Muttern dient, die mit den Befestigungsschrauben des Befestigungsbügels zusammenarbeitet.

Der eigentliche Behälter, beispielsweise ein Koffer, wird nunmehr auf die Tragleiste der Anbauplatte aufgesetzt, wobei die Tragleiste mit Formschlußelementen ausgerüstet ist, beispielsweise Bohrungen und der Behälter mit seinen in üblicher Weise vorgesehenen

- 4 -

Stütznägeln in diese Formschlußelemente, d.h. in diese Bohrungen eingreift. Hierdurch erfolgt ein Festlegen des Behälters, und zwar zusätzlich dadurch, daß nun der Anschlußbügel die Oberseite des Behälters übergreift und in diesem Bereich ebenfalls mit einem Formschlußelement ausgerüstet ist, beispielsweise einem Schnappschloß oder einem Überwurfbügel, der mit dem Behälter in Verbindung gebracht werden kann. Wird ein Schnappschloß eingesetzt, so wird der Einsatz eines Schlüssels hier besonders sinnvoll, da dadurch die sichere Festlegung des Behälters am Gepäckträger erreicht wird.

Es ist erkennbar, daß mit der erfindungsgemäßen Einrichtung beispielsweise die Möglichkeit gegeben wird, mit einem Fahrrad problemlos kleine, aktenkofferartige Behälter zu transportieren, die es beispielsweise einem Arbeitnehmer ermöglichen, mit dem Fahrrad zur Arbeit zu fahren und dabei trotzdem Büromaterial zu transportieren, wobei er nach Verlassen des Zweirades nunmehr lediglich einen aktenkofferartigen Behälter trägt.

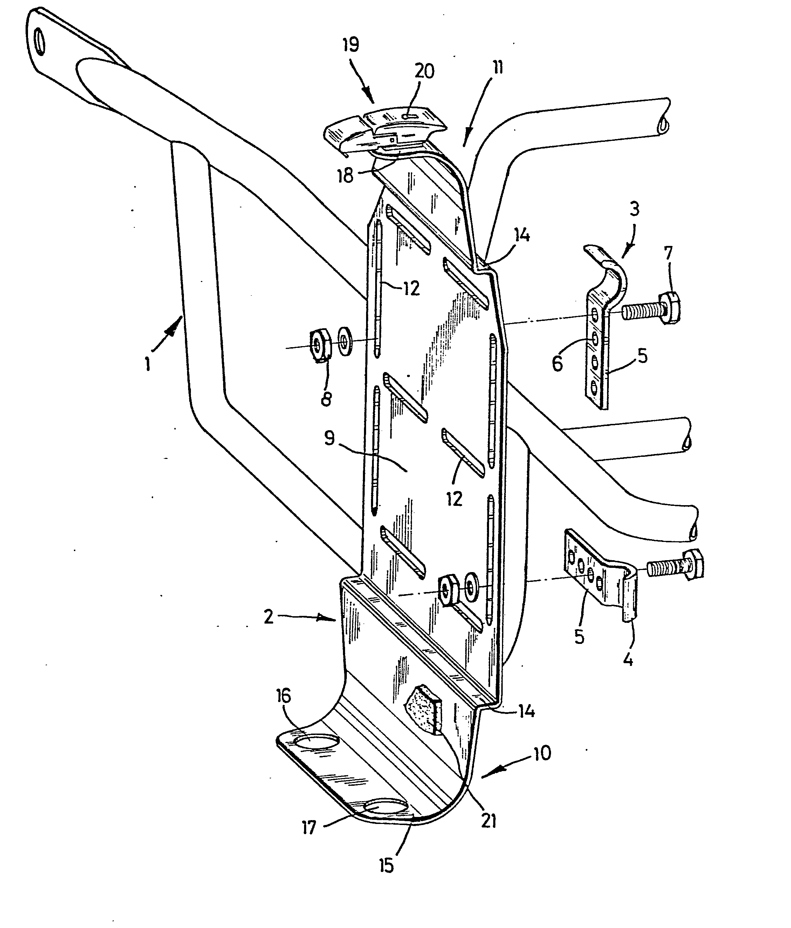

Ein Ausführungsbeispiel der Erfindung wird nachfolgend anhand der Zeichnung erläutert.

In der Zeichnung ist mit 1 allgemein das Gestell eines Gepäckträgers bezeichnet, an dem die Haltevorrichtung angeschlossen werden kann.

Die Haltevorrichtung besteht dabei im wesentlichen aus einer Anbauplatte 2 und Befestigungsbügel 3. Die Befestigungsbügel bestehen aus einem Klauenteil 4 und einem Halter 5, der mit mehreren Bohrungen 6 zur Aufnahme von Befestigungsschrauben 7 ausgerüstet ist. Die Befestigungsschrauben arbeiten mit Muttern 8 zusammen, die mit dem Außengewinde der Befestigungsschraube kämmen.

Die Anbauplatte selbst besteht im wesentlichen aus einem Mittelteil 9, einem Bodenträger 1o und einem Anschlußbügel 11. Das Mittelteil 9 weist dabei sich in verschiedene Richtungen erstreckende Langlochbohrungen 12 auf, die mit den Schrauben 7 der Befestigungsbügel zusammenarbeiten können.

An das im wesentlichen eben ausgebildete Mittelteil 9 schließen der Bodenträger 1o und der Anschlußbügel 11 unter Zwischenschaltung jeweils einer Stufe 14 an, so daß die Ebene des Mittelteiles 9 gegenüber der von dem Bodenträger 1o einerseits und dem Anschlußbügel 11 andererseits gebildeten Ebene zurückversetzt ist. Hierdurch wird der erforderliche Raum zur Aufnahme der Muttern 8 geschaffen.

Der Bodenträger 1o läuft in einer Tragleiste 15 aus, die Formschlußelemente 16 und 17 aufweist, die bei dem dargestellten Ausführungsbeispiel als Bohrungen ausgebildet sind. Diese Bohrungen können mit den bei kofferartigen Behältern üblichen Verschleiß- oder Abstütznägeln zusammenwirken, die in diese Bohrungen eingreifen und dadurch ein Festlegen des Koffers ermöglichen.

Der Anschlußbügel 11 besitzt einen Übergriff 18, der ein Schnappschloß 19 trägt, wobei der Übergriff 18 den eigentlichen kofferartigen Behälter übergreift und mit einem Gegenelement am kofferartigen Behälter über das Schnappschloßelement zusammenwirkt und diesen festlegt. Wie dies bei 2o erkennbar ist, weist das Schnappschloß 19 vorzugsweise einen Schließzylinder auf oder ein sonstiges schloßartiges Gebilde, so daß ein sicheres Festlegen des Behälters an der Anbauplatte gewährleistet wird.

- 7 -

Der eigentliche Behälter kann als Koffer mit einem Aluminiumprofil ausgebildet sein, wobei vorzugsweise ein Kunststoffkoffer eingesetzt wird, da dieser die erforderliche Wetterfestigkeit aufweist.

Die Formschlußelemente der Tragleiste 15 können an die üblichen Entfernungen der Koffernägel angepaßt sein. Es ist aber durchaus auch möglich, den Koffer nachträglich mit an den Abstand der Formschlußelemente 16 und 17 angepaßten Koffernägeln auszurüsten. Ebenso ist das zusätzliche Ausrüsten eines entsprechenden Halteelementes, das mit dem Schnappschloß 19 zusammenwirkt, ohne weiteres möglich.

Es liegt im Rahmen der Erfindung, daß die Innenseite (das ist die zum Betrachter in der Darstellung gerichtete Seite) mit einer weichen, stoßdämpfenden Beschichtung versehen sein kann, die Beschädigungen des aufzunehmenden Gepäckteiles ausschließt. Aus Übersichtlichkeitsgründen ist eine solche weiche Schicht nur schematisch bei 21 als Schaumstoffschicht dargestellt.

Die eigentliche Anbauplatte kann vorzugsweise aus Kunststoff bestehen, da ein leichtes Formen dieses Bauteiles und damit kostengünstiges Herstellen möglich ist. Außerdem wird gleichzeitig durch den Einsatz des Kunststoffes die erforderliche Korrosionsfestigkeit sichergestellt.

Selbstverständlich ist es andererseits aber auch
möglich, die Anschlußplatte ebenso wie die Befestigungsbügel aus Metall herzustellen. Hierauf ist die Erfindung in keiner Weise beschränkt.

Patentansprüche:

1. Haltevorrichtung für Koffer oder kofferartige Behälter am Gepäckträger von Zweiräder, gekennzeichnet durch eine Anbauplatte (2) mit einem Mittelteil (9), einem den anzuschließenden Behälter wenigstens teilweise untergreifenden Bodenträger (1o) und einem den anzuschließenden Behälter wenigstens teilweise übergreifenden Anschlußbügel (11) sowie Befestigungsbügel (3) zum Verbinden der Anbauplatte (2) mit den Streben des Gepäckträgers (1).

2. Haltevorrichtung nach Anspruch 1, dadurch gekennzeichnet, daß das Mittelteil (9) mit sich in unterschiedlichen Richtungen erstreckenden Langlöchern (12) versehen ist.

3. Haltevorrichtung nach einem oder mehreren der vorhergehenden Ansprüche, dadurch gekennzeichnet, daß die Befestigungsbügel (3) einteilig aus einem Klauenteil (4)

- 2 -

und einem Halter (5) bestehen, der in Verbindung mit den Langlöchern Befestigungsschrauben (7, 8) aufnimmt.

4. Haltevorrichtung nach einem oder mehreren der vorhergehenden Ansprüche, dadurch gekennzeichnet, daß der Bodenträger (1o) eine ebene im wesentlichen horizontal ausgerichtete Tragleiste (15) aufweist, die mit Formschlußelementen (16) für den Behälterboden versehen ist.

5. Haltevorrichtung nach einem oder mehreren der Ansprüche 1 bis 3, dadurch gekennzeichnet, daß der Anschlußbügel (11) einen ebenen im wesentlichen horizontal ausgerichteten Übergriff (18) aufweist, der mit Formschlußelementen (16) für die Behälteroberseite versehen ist.

6. Haltevorrichtung wenigstens nach Anspruch 4, dadurch gekennzeichnet, daß die Formschlußelemente (16) in der Tragleiste durch Öffnungen gebildet sind.

7.  Haltevorrichtung wenigstens nach Anspruch 4, <u>dadurch gekennzeichnet</u>, daß die Formschlußelemente (16) in der Tragleiste durch Ausformungen gebildet sind.

8.  Haltevorrichtung wenigstens nach Anspruch 5, <u>dadurch gekennzeichnet</u>, daß die Formschlußelemente (16) an dem Übergriff (18) aus einem Schnappschloß gebildet sind.

9.  Haltevorrichtung wenigstens nach Anspruch 5, <u>dadurch gekennzeichnet</u>, daß die Formschlußelemente (16) an dem Übergriff (18) durch einen Überwurfbügel gebildet sind.

1o. Haltevorrichtung nach einem oder mehreren der vorhergehenden Ansprüche, <u>dadurch gekennzeichnet</u>, daß die Mittelplatte (9) gegenüber dem Ansatz des Bodenträgers (1o) und dem Anschlußbügel (11) stufenförmig versetzt ist (bei 14).

11. Haltevorrichtung nach einem oder mehreren der vorhergehenden Ansprüche, <u>dadurch gekennzeichnet</u>, daß die Anbauplatte aus Kunststoff besteht.

0049331

- 4 -

12. Haltevorrichtung nach einem oder mehreren der vorhergehenden Ansprüche, dadurch gekennzeichnet, daß die zum Behälter hingewandte Seite der Anbauplatte (2) mit einer stoßdämpfenden Beschichtung (21) versehen ist.